# EUROPÄISCHE PATENTANMELDUNG

(11) **EP 1 082 931 A1**
(43) Veröffentlichungstag der Anmeldung: **14.03.2001**
(21) Anmeldenummer: 00119267.3
(22) Anmeldetag: 06.09.2000
(51) Int. Cl.: A47J 27/00

(54) **Haushaltsbehälter**

(30) Priorität: 09.09.1999 IT MI990554 U
(71) Anmelder: BALLARINI PAOLO & FIGLI S.p.A., 46017 Rivarolo Mantovano (MN) (IT)
(72) Erfinder: Dall'Astra, Massimo, Ballarini Paolo & Figli S.p.A, 46017 Rivarolo Mantovano (MN) (IT); Ferron, Francesco, Ballarini Paolo & Figli S.p.A., 46017 Rivarolo Mantovano (MN) (IT)
(74) Vertreter: Mayer, Hans Benno, Dipl.-Ing.

(57) **Zusammenfassung**

Haushaltsbehälter (1), bei dem das Behältervolumen (5) von zwei sich spiegelbildlich gegenüberliegenden Wänden (3,4) begrenzt wird, die kreisbogenförmigen Verlauf aufweisen und diese Wände mit kreisbogenförmigem Verlauf über ebene Wandstücke (6,7) miteinander verbunden sind und die ebenen Wandstücke an ihrem oberen Ende mit Kreissegmenten (8,9) in Verbindung treten, die abstehende Griffe (8,9) bilden, die in einen Rand (10) übergehen, der eine obere Begrenzung mit kreisförmigem Verlauf bildet.

## Beschreibung

Die vorstehende Erfindung betrifft einen Haushaltsbehälter, z.B. einen Kochtopf, eine Kasserole, eine Pfanne oder einen ähnlichen, im Haushalt einsetzbaren Behälter.

Es ist bekannt, dass Behälter zum Aufbewahren oder zum Garen von Lebensmitteln, sowie andere im Haushalt einsetzbare Behälter, abstehende und platzraubende Bauteile aufweisen, z.B. in Form von Griffen oder Henkeln.

Diese Griffe oder Henkel stehen für ein erhebliches Mass vom Umfang des Behälters ab und bilden somit störende Hindernisse, z.B. während des Abstellens eines Kochtopfes auf einer Wärmequelle, oder bei der Unterbringung in Geschirrspülmaschinen, ausziehbaren Schubläden, Schränken oder Regalen.

Es sind auch Haushaltsbehälter bekannt geworden, die Griffe oder Henkel aufweisen, welche demontierbar oder abnehmbar ausgebildet sind, und somit das Einlagern der Behälter erleichtern.

Solche abnehmbaren Griffe oder Henkel stellen aber für den Benützer des Kochgefässes nicht zu unterschätzende Gefahrenquellen dar.

Es ist zu berücksichtigen, dass sich Kochgefässe während ihres Einsatzes stark erhitzen, aus diesem Grund bringt deren Handhabung in der Nähe einer Wärmequelle Gefahren mit sich.

Ferner stellt die Montage und Arretierung von Henkeln oder Griffen in deren Gebrauchslage einen nicht ganz einfachen Vorgang dar, der meist nicht mit der erforderlichen Schnelligkeit durchführbar ist. Auch bedarf die Montage der Griffe oder Henkel einer gewissen Geschicklichkeit, oft ist bei der Montage der Griffe oder Henkel am Haushaltsgefäss auch beim Benützer eine gewisse Ungeschicklichkeit festzustellen.

Werden die Henkel oder Griffe nicht einwandfrei montiert, besteht eine erhebliche Unfallgefahr.

Es ist Aufgabe der vorstehenden Erfindung, die Nachteile des Standes der Technik zu vermeiden und ein stapelbares Haushaltsgefäss vorzuschlagen, welches keine herkömmlichen Griffe oder Henkel aufweist, die vom Körper des Gefässes abstehen und bei der Lagerhalterung oder einem Anordnen des Gefässes auf einer Wärmequelle oder in einer Geschirrspülmaschine zu Störung Anlass geben könnte.

Diese Aufgabe wird erfindungsgemäss mit einem Haushaltsgefäss gelöst, das dadurch gekennzeichnet ist, dass der Innenraum des Behälters von zwei sich spiegelbildlich gegenüberliegenden Wandstücken mit kreisbogenförmigem Verlauf begrenzt ist, dass die kreisbogenförmigen Wandstücke mit eben ausgebildeten Wandstücken verbunden sind, die an ihrer Oberseite mit Kreissegmenten zur Bildung von Griffen verbunden sind und diese Kreissegmente mit einem oberen Abschlussrand mit kreisförmigem Verlauf verbunden sind.

Mit einem Haushaltsbehälter dieser Art ist es möglich, ein Gefäss zu schaffen, das an der Oberseite einen Rand aufweist, der in Umfangsrichtung kreisförmigen Verlauf hat; somit kann auf störende, abstehende Henkel oder Griffe verzichtet werden.

Dank der Vorsehung von zwei Wandteilen mit kreisbogenförmigem Verlauf, welche durch zwei eben ausgebildete Wandstücke miteinander verbunden sind, und ein kegelstumpfförmiges Behältervolumen begrenzen, wird es möglich, eine grosse Anzahl von Behältern sicher zu stapeln, wobei der Behälterstapel nicht dazu neigt, dass sich die Behälter gegenseitig neigen. Ferner wird vermieden, dass die Behälter eine gegenseitige Drehbewegung um ihre Vertikalachse durchführen können.

Der Erfindungsgegenstand wird nun genauer beschrieben und in den beigefügten Zeichnungen dargestellt.

Es zeigen:
Figur 1 einen Behälter in einer Ansicht von oben;
Figur 2 einen Behälter im Schnitt entlang der Linie II-II der Figur 3;
Figur 3 einen Behälter in Ansicht von oben mit einem segmentförmigen Griffteil, das vom Körper des Behälters abgenommen ist;
Figur 4 zeigt einen Behälter im Schitt entlang der Linie IV-IV der Figur 5;
Figur 5 zeigt den Behälter gemäss Figur 4 in einer Ansicht von oben mit einem abgenommen Griffteil;
Figur 6 zeigt einen Behälter im Schnitt entlang der Linie VI-VI der Figur 7;
Figur 7 zeigt einen Behälter gemäss der Figur 6 in Ansicht von oben;
Figur 8 zeigt mehrere, in einem Stapel angeordnete Behälter, teilweise in Ansicht und teilweise im Schnitt.

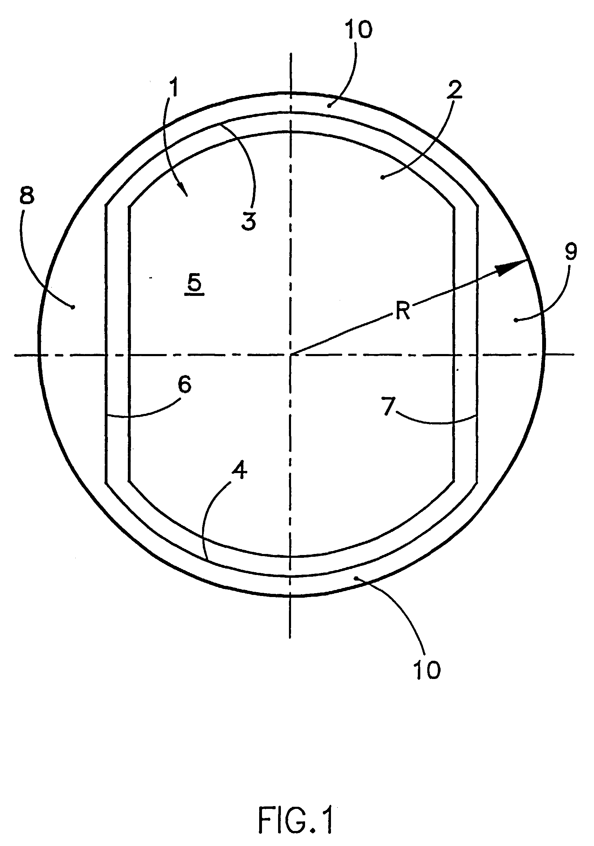

Wie der Figur 1 zu entnehmen ist, weist der gesamthaft mit 1 gekennzeichnete Behälter einen Innenraum 2 auf, der geeignet ist, ein aufzubewahrendes oder zu garendes Produkt aufzunehmen.

Der Innenraum 2 des Behälters 1 wird von zwei Wandstücken 3 und 4 begrenzt, die kreisbogenförmigen Verlauf haben.

Die Wandstücke 3 und 4 stehen mit einem Boden 5 in Verbindung.

Die Enden der bogenförmigen Wandstücke 3 und 4 sind mit eben ausgebildeten Wandstücken 6 und 7 verbunden.

An den oberen Enden der Wandstücke 3, 4 und 6, 7 weist der Behälter 1 einen Rand 10 auf, der kreisförmigem Verlauf hat und in abstehende Randteile übergeht, die Henkel oder Griffe 8 und 9 bilden.

Der Figur 1 kann entnommen werden, dass die Griffe 8 und 9 als Kreissegmente ausgebildet sind, mit einem Radius R, der exakt dem Radius des umlaufenden Randes 10 des Haushaltsbehälters 1 entspricht.

Es wird somit ein Gefäss 1 geschaffen, dessen oberer Rand 10 zusammen mit den Griffen 8, 9 kreisförmigen Verlauf aufweist.

In Figur 1 bilden die Griffstücke 8 und 9, die Kreissegmentform aufweisen, ein einstückiges Bauteil mit dem Körper des Behälters 1 und gehen in den umlaufenden Rand 10 des Behälters ohne Unterbrechnung über.

Selbstverständlich können die Griffstücke 8 und 9 auch als getrennte Bauteile ausgebildet sein, die vom Körper des Behälters 1 abnehmbar oder mit diesen verbindbar sind.

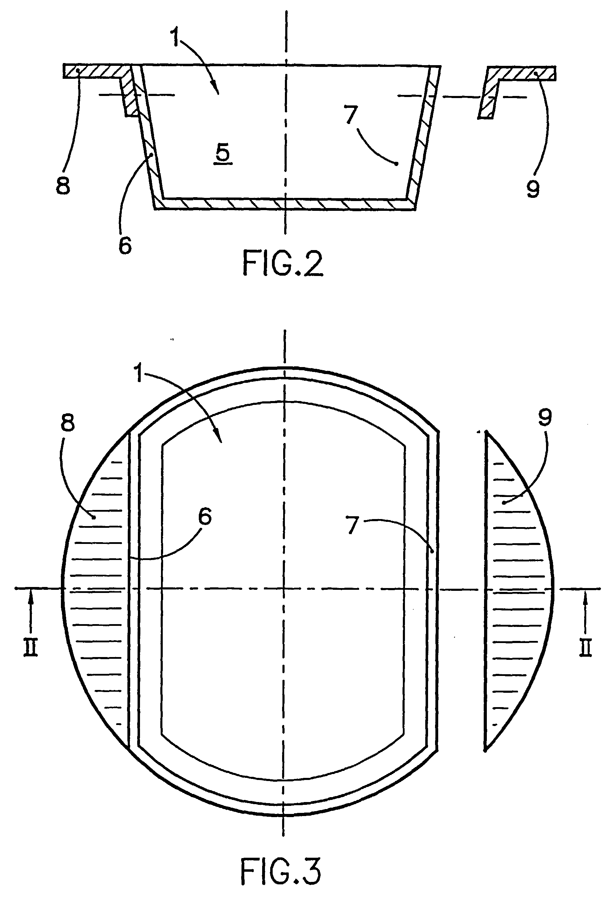

In Figur 2 ist ein Behälter 1 dargestellt, der gleiche Form wie der in Figur 1 dargestellte Behälter aufweist.

Die Griffe 8 und 9, welche Form von Kreissegmenten aufweisen, bilden keinen einstückigen Körper mit dem Behälter 1, sondern sind mit den ebenen Wänden 6 und 7, z.B. unter Zuhilfenahme von Schrauben-, Nietverbindungen oder über eine Klebeverbindung, verbunden.

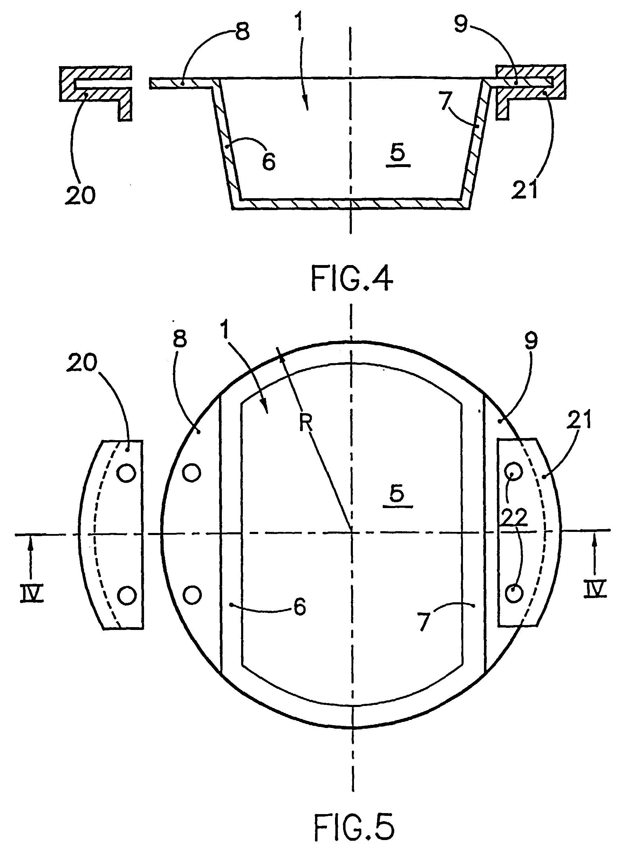

Figur 3 zeigt in einer Draufsicht den Behälter 1 gemäss Figur 2.

Man kann ein Griffstück 8 erkennen, das bereits mit dem Wandstück 6 des Behälters 1 verbunden ist, während das Griffstück 9 noch auf Abstand zur ebenen Wand 7 angeordnet ist.

Die Griffstücke 8 und 9 sind z.B. aus wärmeisolierendem Material hergestellt.

Es ist wichtig, dass die Griffstücke 8 und 9, sobald diese mit den ebenen Wänden 6 und 7 des Behälters 1 verbunden sind, dem oberen Ende des Behälters 1 (Behälterraum) in einer Draufsicht perfekte Kreisform verleihen, ohne abstehende und platzraubende Bauteile, wie z.B. abstehende Griffe oder Henkel zu bilden.

In Figur 4 ist der Behälter 1 in einem Schnitt entlang der Linie IV-IV der Figur 5 dargestellt.

Der Behälter 1 weist an seiner Oberseite Bauteile 8 und 9 auf, die einstückig mit den Wänden 6, 7, die den Innenraum 5 des Behälters 1 begrenzen, verbunden sind.

An diesen Wandstücken 6, 7 können Griffstücke 20 und 21 aufgesteckt werden. Diese Griffstücke 20 und 21 sind U-förmig ausgebildet und sind in vorteilhafter Weise aus wärmeisolierendem Material hergestellt.

Die Griffstücke 20 und 21 können unter Einsatz geeigneter Kleber, Nieten oder Schrauben befestigt werden.

Es besteht auch die Möglichkeit, die Griffstücke 20 und 21 über formschlüssige Rastverbindungen anzubringen. Dadurch eröffnet sich die Möglichkeit, die Griffstücke 20 und 21 abzunehmen, wenn der Behälter 1 z.B. in einer heizbaren Röhre Verwendung finden soll oder in einer Geschirrspülmaschine anzuordnen ist.

In Figur 5 ist der Behälter 1 in einer Ansicht von oben dargestellt.

Das Griffstück 21 ist bereits mit dem Bauteil 9, z.B. unter Einsatz von Schrauben 22 verbunden.

Wie der Zeichnung zu entnehmen ist, ist das Griffstück 21 vollständig in den Umfang R des umlaufenden Randes des Behälters 1 integriert.

Auf der linken Seite des Behälters 1 ist ein abstehender Griff 8 erkennbar, an dem das Griffstück 20 montierbar ist.

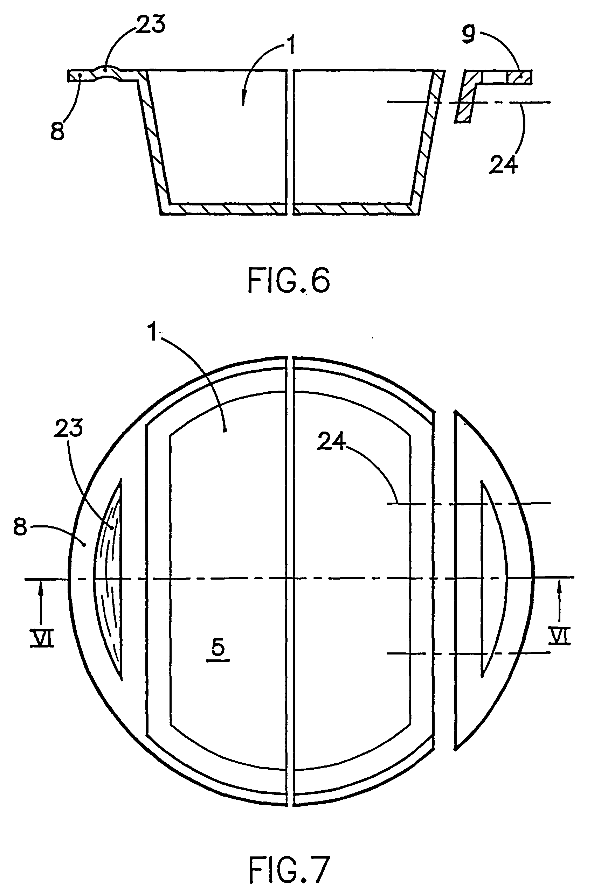

In Figur 6 ist ein Behälter 1 im Schnitt entlang der Linie VI-VI der Figur 7 dargestellt, der Behälter weist ein Griffstück 8 auf. Dieses Griffstück 8, um dessen Griffigkeit zu verbessern, weist Verformungen oder Einstanzungen 2, 3 in die Griffstücke 8, 9 auf.

Auf der gegenüberliegenden Seite ist ein Griffstück 9 dargestellt, welches nicht einstückig mit dem Behälter 1 verbunden ist.

Dieses Griffstück 9 besteht z.B. aus wärmeisolierendem Material und ist mit der Wand 7, z.B. unter Verwendung von Schrauben oder Nieten 24 verbunden.

Der Figur 7, die den Behälter 1 gemäss Figur 6 in einer Ansicht von oben darstellt, kann entnommen werden, dass sowohl bei Ausbildung des Behälters 1 als einstückiges Teil mit Griffstücken 8 und 9 als auch bei Montage der Griffstücke, unter Einsatz von Schrauben oder Nieten 24, der Behälter 1 in der Draufsicht an seiner Oberseite stets kreisförmigen Verlauf aufweist.

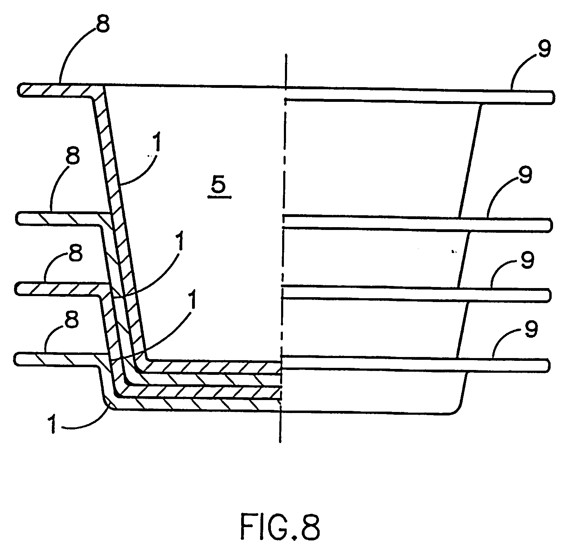

Der Figur 8 kann entnommen werden, dass die Behälter 1, die durch Griffstücke 8 und 9 begrenzt werden, einwandfrei stapelbar sind, unter Verzicht auf abstehende Griffteile oder Stiele leicht einlagerbar sind, ohne dass dabei in Schränken, Regalen oder in einer Geschirrspülmaschine ein unerwünscht grosser Platzbedarf erforderlich wird.

## Patentansprüche

1. Haushaltsgefäss (1), **dadurch gekennzeichnet**, dass der Innenraum (5) des Behälters (1) von zwei sich spiegelbildlich gegenüberliegenden Wandetücken (3, 4) mit kreisbogenförmigem Verlauf begrenzt ist, dass die kreisbogenförmigen Wandstücke (3, 4) mit eben ausgebildeten Wandstücken (6, 7) verbunden sind, die an ihrer Oberseite mit Kreissegmenten (8, 9), zur Bildung von Griffen (8, 9), verbunden sind, und diese Kreissegmente (8, 9) mit einem oberen Abschlussrand (10) mit kreisförmigem Verlauf (R) verbunden sind.

2. Haushaltsgefäss, nach Patentanspruch 1, **dadurch gekennzeichnet,** dass das Gefäss (1) Kegelstumpfform aufweist.

3. Haushaltsgefäss, nach Patentanspruch 1, **dadurch gekennzeichnet,** dass der Rand (10), der das Gefäss (1) an seiner Oberseite begrenzt, kreisförmigen Verlauf (R) aufweist.

4. Haushaltsgefäss, nach Patentanspruch 1, **dadurch gekennzeichnet,** dass die Griffstücke (8, 9) Kreissektorform aufweisen und in die ebenen Wandstücke (6, 7) des Gefässes integriert oder mit diesen unter Verwendung von Schrauben, Nieten oder Klebeverbindung verbunden sind.

5. Haushaltsgefäss, nach Patentanspruch 1, **dadurch gekennzeichnet,** dass die Griffstücke (8, 9) Kreissektorform aufweisen und aus wärmeisolierendem Material bestehen.

6. Haushaltsgefäss, nach Patentanspruch 1, **dadurch gekennzeichnet,** dass das Gefäss (1) an seiner Oberseite abstehende Flächen (8, 9) aufweist, die einstückig mit den Wänden (6, 7), welche den Innenraum (5) des Gefässes (1) begrenzen, verbunden sind und dass auf diesem abstehenden Bauteil (8, 9) Griffstücke (20, 21) angeordnet sind, die im Querschnitt U-Form aufweisen.

7. Haushaltsgefäss, nach Patentanspruch 1, **dadurch gekennzeichnet,** dass die abstehenden Bauteile (8, 9) des Gefässes (1) Verformungen oder Ausstanzungen (23) zur Erhöhung der Griffigkeit aufweisen.

8. Haushaltsgefäss, nach Patentanspruch 1, **dadurch gekennzeichnet,** dass die Bauteile (8, 9) abnehmbar über eine Rastverbindung mit dem Gefäss (1) verbunden sind.
